(19) Europäisches Patentamt
European Patent Office
Office européen des brevets

(11) **EP 4 329 293 B1**

(12) **EUROPEAN PATENT SPECIFICATION**

(45) Date of publication and mention
of the grant of the patent:
**11.09.2024 Bulletin 2024/37**

(21) Application number: **22192156.2**

(22) Date of filing: **25.08.2022**

(51) International Patent Classification (IPC):
*H04N 7/18* (2006.01)     *A61B 5/16* (2006.01)
*G06F 3/01* (2006.01)     *G06V 20/52* (2022.01)
*H04N 23/66* (2023.01)     *H04N 23/90* (2023.01)

(52) Cooperative Patent Classification (CPC):
**H04N 7/181; G06F 3/012; G06F 3/013;
G06V 20/52; G06V 40/18; G08B 13/19691;
G08B 21/06;** H04N 23/611; H04N 23/90

(54) **SUPPORT SYSTEM OF THE CONTROL OF SURVEILLANCE CAMERAS**

UNTERSTÜTZUNGSSYSTEM ZUR STEUERUNG VON ÜBERWACHUNGSKAMERAS

SYSTÈME DE SUPPORT DE COMMANDE DE CAMÉRAS DE SURVEILLANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.02.2024 Bulletin 2024/09**

(73) Proprietor: **Artificialy SA**
**6900 Lugano (CH)**

(72) Inventors:
• **GAMBARDELLA, Luca Maria**
**6900 Massagno (CH)**
• **BINAGHI, Damiano**
**22070 Montano Lucino (CO) (IT)**

(74) Representative: **M. Zardi & Co S.A.**
**Via G. B. Pioda, 6**
**6900 Lugano (CH)**

(56) References cited:
WO-A1-2021/199853    WO-A1-2022/139022
JP-A- 2012 070 308    KR-A- 20200 098 788
US-A1- 2009 141 895    US-A1- 2018 190 091
US-A1- 2019 228 494    US-A1- 2020 125 081
US-A1- 2021 004 195

• NYLIN MAGNUS ET AL: "Attention Support with
Soft Visual Cues in Control Room Environments",
2020 24TH INTERNATIONAL CONFERENCE
INFORMATION VISUALISATION (IV), IEEE, 7
September 2020 (2020-09-07), pages 160 - 165,
XP033886503, DOI: 10.1109/IV51561.2020.00035

**Description**

Field of application

The invention relates to a support system of the control of surveillance cameras.

In particular, the invention relates to a system of the type indicated above and comprising a plurality of surveillance cameras, each installed in a respective site to be controlled; a plurality of display devices installed in a control area, each of which has a known location in the control area; a network infrastructure adapted to support the transmission of a plurality of videos from the surveillance cameras to the display devices.

The invention also relates to a support method of the control of surveillance cameras.

Prior art

Several support systems of the control of surveillance cameras are known.

Such systems comprise a plurality of display devices installed in a control area, designed to display surveillance cameras, each installed in a respective site to be controlled, e.g., in a bank or casino. A network infrastructure is adapted to support the transmission of the videos from the surveillance cameras to the display devices.

An operator in the control area is responsible for monitoring the display devices. Monitoring consists in cyclically paying attention to the videos transmitted on the display devices, so as to verify that there are no anomalies or suspicious presences. In order to facilitate the monitoring and increase the security, the display devices are installed to a wall, for example, to be clearly visible and within reach of the operator.

US 2018/190091 discloses an eye tracker that may be used to identify the operator's gaze area and therefore to identify a portion of the display, or one or more displays in a group of displays, at which the operator is not looking. Accordingly, the video monitoring system may allocate more resources to looked image, and reduce resources allocated to other streams corresponding to frames which are not the focus (e.g., in the peripheral vision) of the operator.

US 2021/004195 discloses several displays in a monitoring station receiving images from cameras in a workign area. Line of sight of an operator at the station is detected to determine display or part of display that is been looked at. Corresponding image is enlarged based on this.

WO 2021/199853 A1 discloses a line-of-sight detection unit detecting the line of sight of the registration operator who is looking at the captured image which is shown on a display device. If the registration operator's detected line of sight has not moved for an attention time configured in advance, the extraction unit extracts an image of the person or object appearing in the subregion of the captured image where the registration operator's line of sight is directed. The registration unit registers the extracted image in a predetermined storage device.

However, the main difficulties encountered in these monitoring systems relate to maintaining an adequate level of attention. As time passes and in the absence of particular anomalies, it happens that the operator relaxes and inadvertently gets distracted, turning his/her gaze elsewhere, even for a few instants. The lack of attention sometimes appears as an imbalance in the monitoring time of some display devices compared to others. This imbalance is not intentional but dictated by a habit of the operator's movements, which is also mostly unintentional. All these problems reduce the security of the video surveillance system with the risk that some sites to be controlled are not adequately treated.

The technical problem underlying the present invention is to improve the video surveillance system according to the known art, by overcoming the current limitations afflicting it, and in particular by increasing the operator's general attention, balancing his/her attention on all display devices, appropriately drawings his/her attention where required.

Summary of the invention

A support system of the control of surveillance cameras according to the present invention is defined in claim 1.

A support method of the control of surveillance cameras according to the present invention is defined in claim 13.

Preferred embodiments of the control system according to the present invention are provided in claims 2 to 12.

Further features and advantages of the method and system according to the present invention are provided with reference to the accompanying drawings, given only by way of non-limiting example of the present invention.

Brief description of the accompanying figures

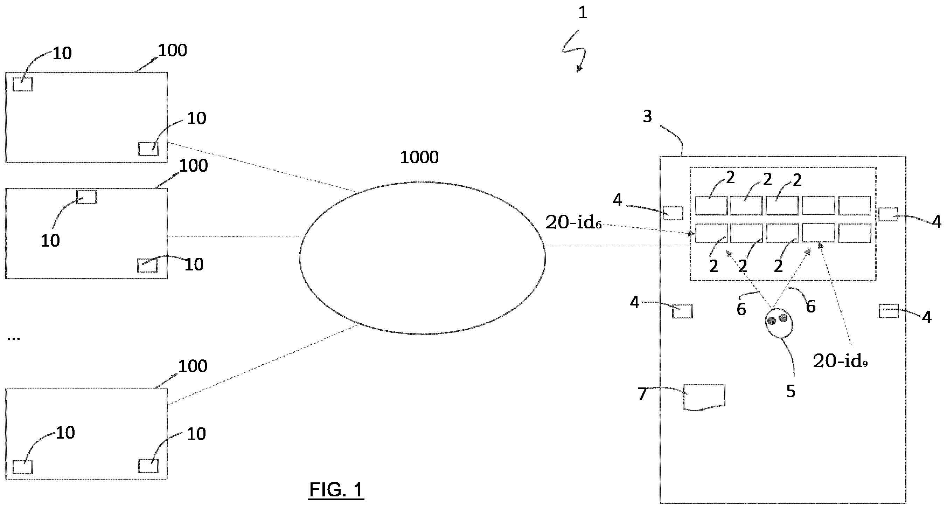

Figure 1 diagrammatically depicts a support system of the control of surveillance cameras, according to the present invention.

Detailed description

With reference to Figure 1, a support system of the control of surveillance cameras 10 is diagrammatically depicted and globally indicated by reference numeral 1. The surveillance cameras 10 are each designed to be installed in a respective site 100 to be monitored, such as in the premises of a bank subject to continuous control, or in the premises of a casino, a jewelry store, or an area requiring a different type of monitoring, not so much for the presence of valuables but rather for the danger of the area for human safety.

The sites 100 to be controlled diagrammatically depicted in Figure 1 can be part of the same building or different buildings, placed at a distance from one another but all monitored with the system 1 of the present invention. Moreover, every site 100 to be controlled, e.g., every room 100, can be surveilled by one or more of the surveillance cameras 10.

Surveillance is centralized in a control area 3, and delegated to an operator 5, such as a police officer operating in a control station 3, just to mention an example, and certainly without any limitation on the use of the system. A plurality of display devices 2 is installed in the control area 3. The control area 3 is typically a room and the display devices 2 are LCD or LED displays, for example, placed side by side in rows or in an array or according to other patterns, and fixed to a wall or other load-bearing structure in the control area 3, thus according to a known location in the control area 3.

Every display device 2 has its identification code, and an X, Y positioning in the array or a physical location associated with a three-dimensional coordinate system $X_2$, $Y_2$, $Z_2$ within the control area 3. The control area 3 is at a distance from the sites 100 to be controlled, therefore remote therefrom. The videos captured by the surveillance cameras 10 are transmitted to the display devices 2, which are controlled by a controller 7.

The video transmission is carried out through a network infrastructure 1000, adapted to support the transmission of videos from the surveillance cameras 10 to the display devices 2. The network infrastructure can be wired, wireless or partially wired and partially wireless.

In an embodiment, the display devices 2 are provided with a communication interface and an IP address, and directly receive the video stream from the surveillance cameras 10. For example, every display device 2 receives a video from a respective surveillance camera 10. In another embodiment, the controller 7 is associated with an IP address, the video streams are transmitted from the surveillance cameras 10 to the controller 7, and directed by the latter to the display devices 2, so that every display device 2 receives a video from a respective surveillance camera 10 by means of the controller 7. Moreover, in an embodiment, a display device 2 can receive a plurality of videos from a plurality of video surveillance cameras, such videos being simultaneously displayed in separate areas of the display device 2.

A plurality of control cameras 4 is also installed in the control area 3 to film the operator 5 in the control area 3. The control cameras 4 are synchronized and calibrated.

The control cameras 4 are located in predetermined positions in the control area. For example, every control camera 4 has its identification code, and a physical location associated with (a system of) three-dimensional coordinates $X_4$, $Y_4$, $Z_4$ in the control area 3. The control cameras 4 are located at different angles with respect to the operator 5 in order that the face of operator 5, and especially his/her eyes, can be filmed, irrespective of the position of operator 5.

The controller 7 is configured to receive the plurality of videos from the surveillance cameras 4 and carry out some checks repeatedly, which are detailed below.

These checks are primarily intended to determine which display device 2 is looked at by operator 5 at a certain instant and how long the attention of operator 5 remains on such a display device 2.

The time instants are indicated below as time intervals $I_1$, $I_2$, ..., $I_n$.

In each of these intervals $I_1$, $I_2$, ..., $I_n$, the attention of operator 5, and in particular his/her gaze (i.e., the pointing direction of the operator's eyes), can fall on a display device 2. For example, in the first interval $I_1$, the operator 5 could point his/her gaze at a first display device 2 for a time $t_1I_1$.

For every interval $I_i$ considered, the controller 7 carries out the following checks.

The controller 7 first processes the plurality of videos of the control cameras 4 in a time interval $I_i$ for determining a pointing direction 6 of the gaze of operator 5 within the control area 3. Video processing comprises several steps, in which the controller 7 analyzes a plurality of frames of each video, in order to extract specific features from each frame, in particular the face and, inside the face, the eyes. These steps are described more specifically according to an embodiment described later.

Still as part of the checks in the time interval $I_i$, the controller determines a duration d of the pointing at the display device 2 pointed by the operator 5. In the example provided above, the pointing duration in the interval $I_1$ is $t_1I_1$, and is associated with the display device 2, having a unique identifier, for example 2-$id_6$ (Figure 1).

The checks repeatedly carried out by the controller 7 on a plurality of intervals $I_1$, $I_2$, ..., $I_n$ are used to determine whether one or more display devices were "ignored" by the operator, i.e., whether they were not sufficiently monitored by the gaze of operator 5.

In particular, for each display device 2, the controller 7 counts the overall pointing duration D in the plurality of time intervals $I_1$, $I_2$, ..., $I_n$ as the sum of the pointing durations d at the display device 2 in each time interval $I_1$, $I_2$, ..., $I_n$; compares the overall pointing duration D of each display device 2 with a minimum pointing duration $d_{min}$ of each display

device 2; and outputs an alert if the overall pointing duration D at one or more display devices 2 is lower than the minimum pointing duration $d_{min}$. The alert activates a signal for drawing the attention of operator 5 towards the one or more display devices 2 (i.e., those "ignored").

In an embodiment, the interval duration is equal to the minimum pointing duration $d_{min}$ and the interval number n is equal to the number of display devices 2. Said parameters (interval duration, minimum pointing duration $d_{min}$, interval number n, number of display devices 2) are configurable and configured in the controller 7. The advantage of this embodiment is that, on average, in order to avoid alerts from being triggered, the operator's gaze should focus on a display device 2 for the duration of an interval $I_1$, $I_2$, ..., $I_n$ but no longer (otherwise it would not be possible to monitor every display device 2 at least once in the cycle of intervals $I_1$, $I_2$, ..., $I_n$). In other words, the operator's gaze resting on a display device 2 for a longer time than the duration of an interval $I_i$, e.g., for the duration of 4 intervals, would already preclude the operator 5 from covering the monitoring of all the other display devices 2 in the cycle of intervals $I_1$, $I_2$, ..., $I_n$ for a sufficient duration. In such a case, according to the present invention, the controller 7 attempts to divert immediately the attention of operator 5 from the excessively monitored display device 2, for example by altering the video of the device 2 (with a coloration of the video, e.g., red, or an image intermittence). Conversely, if the gaze of operator 5 is very attentive and dynamic, and thus remains on a display device 2 for a shorter time than the duration of an interval $I_i$, e.g., for half the duration of the interval, it potentially allows the operator 5 to cover the monitoring of all the other display devices 2 in the cycle of intervals $I_1$, $I_2$, ..., $I_n$ and to look back on the device already monitored for half the duration of the interval as well. In this embodiment, correction factors are provided to avoid the too frequent activation of alerts. For example, one of the correction factors consists in considering the interval duration equal to the minimum pointing duration $d_{min}$ unless a correction factor f (i.e., interval duration = minimum pointing duration $d_{min}$ * f). The correction factor is configurable in the controller 7 and is a lack-of-attention tolerance of operator 5, not only in terms of concentration (focus) on the display devices 2, but also of regularity in the timing of moving the gaze from one device 2 to the other.

As mentioned above, some details of the step of determining the pointing direction 6 of the operator's gaze, as configured in the controller 7, are shown below according to a possible embodiment.

In particular, in order to determine the pointing direction 6 of the gaze of operator 5, the controller 7 detects, by means of each control cameras 4, the position of the operator's face in the frames of the videos filmed by the control cameras 4, while the operator is looking at one of the plurality of display devices.

The controller 7 then detects the position of each eye of operator 5 with respect to the frames filmed by the control cameras 4.

In particular, every control camera 4 detects the two-dimensional coordinates $X_5$, $Y_5$ of the eyes of operator 5. Such two-dimensional coordinates $X_5$, $Y_5$ can be calculated with an artificial intelligence algorithm which determines, in each frame of the image of operator 5, the position of the face in the frame and then the position ($X_5$, $Y_5$) of the eyes in the face. The controller 7 then calculates the coordinates $Z_{53}$ of the eyes of operator 5 in the control area 3, by a triangulation. The plurality of two-dimensional coordinates $X_5$, $Y_5$ in the frame are mapped to two-dimensional coordinates $X_{53}$, $Y_{53}$ in the control area 3 and then used to carry out the triangulation and determine the coordinates $Z_{53}$.

In a variant, the positioning of the eyes in the three-dimensional space and thus the coordinates $X_{53}$, $Y_{53}$, $Z_{53}$ are determined by means of an artificial intelligence algorithm, which is based on volumetric, not two-dimensional, models of the face of operator 5.

At the end of the above-mentioned steps, each eye of the operator is then associated with a three-dimensional coordinate $X_{53}$, $Y_{53}$, $Z_{53}$. The viewpoint of operator 5 can be calculated as the equidistant point on a straight eye junction segment ($X_{53'}$, $Y_{53'}$, $Z_{53'}$).

The pointing direction of the gaze of operator 5 is then determined. For this purpose, another artificial intelligence algorithm is used, for example. The algorithm determines the shape of some features of the eye in the frame of at least one of the control cameras 4, such as the eyelid or iris. Based on the shape of such features in the frame, the algorithm determines the gaze pointing direction. The determined direction is a straight line R in the three-dimensional space, passing though the viewpoint $X_{53'}$, $Y_{53'}$, $Z_{53'}$ of operator 5.

Considering the pointing direction and thus the straight line R, the display device 2 pointed by the gaze of operator 5 is determined. For this purpose, a "surface in space" / "straight line R" intersection is preferably calculated as explained below, where the "surface in space" is one of the surfaces occupied by the display devices 2.

As mentioned, every display device 2 has known coordinates $X_2$, $Y_2$, $Z_2$ in space. In fact, the display device 2 involves a plurality of points $X_2$, $Y_2$, $Z_2$ in the three-dimensional space of the control area 3, extending over a predetermined surface (that of the LCD or LED monitor).

The straight line R is analytically intersected with the surface $X_2$, $Y_2$, $Z_2$ of the display devices 2, in order to determine an intersection point with one of the surfaces. Such an intersection point is the point looked at by the operator 5. The looked-at display device 2 is that occupying the surface comprising $X_2$, $Y_2$, $Z_2$ of the point intersected by the straight line R.

In essence, the coordinates of the looked-at display device are determined and obtained as intersection points of the straight lines in space R1, R2, ... Rn, i.e., the straight lines of the direction of the operator's gaze looking at predetermined points of the display device from different viewpoints.

In the above-mentioned example, the coordinates of the display devices 2 are known a priori, i.e., configured in the controller 7.

The configuration step can be dynamic, e.g., it can be determined by means of a calibration. Calibration consists in showing a number of calibration points on the display device 2 and asking the operator 5 to look at the calibration points in order to construct a model. The model allows associating the calibration point coordinates with the orientation of the operator's face and eyes. In essence, the orientation is an angle of movement of the face and eyes with respect to a centered position. The angle of movement and the looked-at calibration points are used to calculate the distance between the operator 5 and the display device 2. For example, given a first calibration point $X_{21}$, $Y_{21}$ and a second calibration point $X_{22}$, $Y_{22}$ having a preset distance $d_{21-22}$ on the display device, the greater the angle of movement of the face and eyes of operator 5 to move his/her gaze from the calibration point $X_{21}$, $Y_{21}$ to the calibration point $X_{21}$, $Y_{21}$, the shorter the distance between the display device 2 and the operator 5. This determination of distances can also be supported by an artificial intelligence algorithm, based on a model of preset angular movements (of the face and eyes) and respective distances between a viewer and a viewing target.

In essence, the determination of the coordinates of the display devices takes place using different viewpoints of the operator.

In an embodiment, the operator 5 / display device 2 distance is determined by applying a camera (possibly by temporarily applying the control cameras 4) to the display device and calculating the time of flight (ToF).

According to different embodiments, the support system is expected to output different types of alert. In particular, the step of controlling one or more display devices 2 (i.e., the devices "ignored" by the gaze of operator 5) comprises activating an indicator light, such as a LED, for example, associated with the display devices 2 or changing a color of the indicator light (which can normally be green, and then switched to red). Alternatively, the step of controlling one or more display devices 2 is expected to comprise changing a color of the video of the display device 2. For example, the color of the video can be switched to a blue shade when the display device 2 is not sufficiently looked at (which would distinguish it from an excessively looked-at display device 2 already described above, where the color of the video would be red). In an embodiment, a plurality of colors of LED indicator lights are taken into account: a green color indicates that the time for looking at the monitor (display devices 2) is in the preset ranges, a yellow color indicates that the viewing time is longer than the preset time, and a red color indicates that the viewing time is insufficient.

According to a further embodiment, the step of controlling the display devices 2 comprises displaying a video overlaid on the video received by the display devices 2 from the surveillance camera 10. The overlay is of the Picture in Picture (PiP) type, for example. For example, the primary video is the video of the surveillance camera 10 associated with the display device 2; the secondary video (that occupying a smaller area in the PiP image) is the video of the surveillance camera 10 for which the alert was raised; such a secondary video preferably shows the superimposed identification of the display device 2 towards which the gaze is redirected (such a display device 2 towards which the gaze is redirected is further brought to the operator's attention as mentioned above, for example by switching the video related to the blue color).

The controlling step comprises simultaneously activating a plurality of signals to draw the attention of operator 5 for a plurality of display devices 2, if the overall pointing duration D of the plurality of display devices 2 is lower than the minimum pointing duration $d_{min}$ of said plurality of display devices 2.

In an embodiment, the controller 7 is configured to set a plurality of minimum pointing durations $d_{min}$, each (or at least one) with a different duration from the other pointing durations. In such a case, it is intended to give some display devices 2 viewing priority over others. For example, such a configuration would allow dedicating a significant percentage of the operator's time (80%) to a specific display device 2, considered of extreme importance (e.g., a bank vault), and a remaining time (20%) to other devices. The percentages given are only examples, and a plurality of differentiated durations can be set.

The viewing priority can be statistically associated with the physical arrangement of the display devices 2 in the control area 3. For example, in an array arrangement of m rows and n columns, the display device 2 in position 1*1 has the highest priority (x) and the other devices have a decreasing priority (x-1, x-2) moving by rows (1*2, 1*3).

However, according to the present invention, the viewing priority can be established dynamically and not statistically, and in particular increased over time for the display devices 2 which were "ignored" (not sufficiently surveilled) in the past. For example, the controller 7 is configured to vary the plurality of minimum pointing durations $d_{min}$ for the various display devices 2, where the variation is an increase in the minimum pointing duration $d_{min}$ of a display device 2 in the time intervals $I_{n+1}$, $I_{n+2}$, ... following the time intervals $I_1$, $I_2$, ..., $I_n$ already considered, if the overall pointing duration D in the time intervals $I_1$, $I_2$, ..., $I_n$ already considered is lower than the minimum pointing duration $d_{min}$.

Every display device 2 preferably displays the viewing priority and/or the minimum viewing duration.

According to an embodiment, the support system 1 raises the attention of operator 5 when the operator 5 repeats the same sequence of viewing operations over time, since a completely predictable monitoring can be less effective and more tiring for the operator 5. In the array arrangement of m rows and n columns, this occurs, for example, if the gaze moves along the display devices of one row, then along those of the next row, up to the last row, and then resumes from the first one.

Therefore, the controller 7 is preferably configured to determine sequences of pointing at the plurality of display devices 2, every sequence comprising at least m display devices 2, where m is configurable in the controller 7 (and not necessarily corresponding to the number of the devices 2 in a row). The controller then determines at least one recurrence in the sequences of pointing at the plurality of display devices 2, and activates the signal for drawing the attention of operator 5, to avoid a further recurrence in the sequences of pointing at the plurality of display devices 2, at least within a preset time period.

For example, considering a preset time period of 10 minutes, a total number of 20 display devices 2 ($2_1$, ..., $2_{20}$) and a control sequence of 8 in number, the alarm is generated if the operator looks at, in the time period of 10 minutes, more than once, the sequence of devices $2_{19}$, $2_2$, $2_{16}$, $2_6$, $2_1$, $2_9$, $2_8$, $2_7$ in the same order.

The Applicant carried out experimental tests and observed that the plurality of time intervals $I_1$, $I_2$, ..., $I_n$ can preferably be set to a duration $I_d$ between 10 milliseconds and 300 milliseconds, the number $I_n$ of the plurality of intervals between 100 and 10,000. Given k display devices 2, e.g., k between 5 and 50, the minimum pointing duration $d_{min}$ is preferably between $[(I_d \times I_n)/k]/w$ and $[(I_d \times I_n)/k]$, where w is the tolerance on the operator's attention.

In a simple example:

k = 10 display devices,

$I_d$ = 33 milliseconds of duration of an interval,

$I_n$ = 1000 intervals

w = tolerated lack of attention between 1 and 3

would give

$$(33*1000 / 10)/3 \text{ milliseconds} <= d_{min} <= (33*1000 / 10) \text{ milliseconds}$$

That is,

$$1.1 \text{ sec} <= d_{min} <= 3.3 \text{ sec}$$

The example given is not limiting. Preferably, the control system is resettable by the operator. Resetting consists in the possibility to clear the calculations related to the viewing time of the display devices 2. Only by way of example, resetting can be useful in conjunction with a shift change between two operators, when the incoming operator needs to have a cleaned-up situation with respect to the history of the monitoring operations carried out by the previous viewer.

In an embodiment, the system is further configured to detect the operator fatigue. The detection is carried out based on the operator's videos captured by the control cameras 4. The operator's face is constantly monitored, by analyzing the blinking of the eyelids, any grimaces of the face, such as possible yawns. The pupils, the gaze direction (as already explained above), the abnormal head inclination towards the ground or to the side can be further monitored. If the eyes point sideways or if the head inclination is unnatural, the system outputs an alert.

## Claims

1. A support system (1) of the control of surveillance cameras (10), comprising:

   - a plurality of surveillance cameras (10), each installed in a respective site (100) to be controlled;
   - a plurality of display devices (2) installed in a control area (3), every display device (2) having a known location in the control area (3);
   - a network infrastructure (1000) adapted to support the transmission of a plurality of videos from the surveillance cameras (10) to the display devices (2);
   a plurality of control cameras (4) installed in the control area (3) to film an operator (5) in the control area (3), said control cameras (4) being located in predetermined positions in the control area, at different angles with respect to the operator (5);

a controller (7) configured to receive a plurality of videos from the control cameras (4) and carry out repeatedly, at time intervals ($I_1$, $I_2$, ..., $I_n$), the followings steps:

- processing the plurality of videos of the control cameras (4) in a time interval ($I_i$) to determine a pointing direction (6) of the gaze of the operator (5);
- determining, between said display devices (2), a display device (2) pointed, in the time interval ($I_i$), by the gaze of the operator (5);
- determining a duration (d) of the pointing at said at least one display device (2) pointed in the time interval ($I_i$);

**characterized in that** said controller (7) being further configured to:

- count, for each display device (2), the overall pointing duration (D) in a plurality of time intervals ($I_1$, $I_2$, ..., $I_n$), said overall pointing duration (D) being the sum of the pointing durations (d) at the display device (2) in each time interval ($I_1$, $I_2$, ..., $I_n$);
- compare the overall pointing duration (D) of each display device (2) with a minimum pointing duration ($d_{min}$) of each display device (2);
- control one or more display devices (2) by activating a signal for drawing the attention of the operator (5), if the overall pointing duration (D) at said one or more display devices (2) is lower than the minimum pointing duration ($d_{min}$).

2. The support system (1) according to claim 1, **characterized in that** the controller (7) is configured to determine, between said display devices (2), the display device (2) pointed in the time interval ($I_i$) by:

- detecting a viewpoint of the operator (5) in the control area (3), said control area (3) being a three-dimensional space and said viewpoint being a point of the three-dimensional space;
- calculating a straight line (R) passing though the viewpoint in the pointing direction (6);
- calculating an intersection between the straight line (R) and one of the surfaces of the display devices (2) in the control area (3),

the display device (2) pointed in the time interval ($I_i$) being the display device (2) associated with the surface intersected by the straight line (R).

3. The support system (1) according to claim 2, **characterized in that** the controller (7) is configured to detect the viewpoint of the operator (5) by executing an artificial intelligence algorithm (AI-a) based on a model of three-dimensional images
or
by determining a plurality of two-dimensional coordinates of the operator's eyes acquired in frames by the plurality of control cameras (4), mapping said two-dimensional coordinates in respective coordinates in the control area (3), and then triangulating, the controller (7) being configured to carry out said determination of a plurality of two-dimensional coordinates by executing an artificial intelligence algorithm (AI-b) based on a model of two-dimensional images.

4. The support system (1) according to claim 1, **characterized in that** the controller (7) is configured to detect the pointing direction (6) by means of an artificial intelligence algorithm (AI-c) based on a model of two-dimensional or three-dimensional images.

5. The support system (1) according to claim 2, **characterized in that** the controller (7) is configured to carry out a dynamic calibration step in which the calibration points are shown on the display devices (2) and the operator (5) looks at the calibration points to construct an association model between calibration point coordinates and the orientation of the operator's face and eyes when looking at the calibration points, the controller (7) being further configured to associate the orientation of the operator's face and eyes with a distance between the operator (5) and the display devices (2).

6. The support system (1) according to claim 1, **characterized in that** said step of controlling one or more display devices (2) comprises activating an indicator light associated with said one or more display devices (2) or changing a color of said indicator light.

7. The support system (1) according to claim 1, **characterized in that** said step of controlling one or more display devices (2) comprises changing a color of the video received by said one or more display devices (2) from the surveillance camera (10).

8. The support system (1) according to claim 1, **characterized in that** said step of controlling one or more display devices (2) comprises displaying a video overlaid on the video received by said one or more display devices (2) from the surveillance camera (10), said overlay being of the Picture in Picture (PiP) type.

9. The support system (1) according to claim 1, **characterized in that** the controller (7) is configured to set a plurality of minimum pointing durations ($d_{min}$), said plurality of minimum pointing durations ($d_{min}$) being different for various display devices (2).

10. The support system (1) according to claim 8, **characterized in that** the controller (7) is configured to vary the plurality of minimum pointing durations ($d_{min}$) for the various display devices (2), said variation comprising the increase in the minimum pointing duration ($d_{min}$) of a display device (2) in the time intervals ($I_{n+1}$, $I_{n+2}$, ...) following said plurality of time intervals ($I_1$, $I_2$, ..., $I_n$), if the overall pointing duration (D) in the plurality of time intervals ($I_1$, $I_2$, ..., $I_n$) is lower than the minimum pointing duration ($d_{min}$).

11. The support system (1) according to claim 1, **characterized in that** the controller (7) is configured to

- determine sequences of pointing at the plurality of display devices (2), every sequence comprising at least m display devices (2), where m is configurable in the controller (7);
- determine at least one recurrence in the sequences of pointing at the plurality of display devices (2);
- activate the signal for drawing the attention of the operator (5), to avoid a further recurrence in the sequences of pointing at the plurality of display devices (2) within a preset time period.

12. The support system (1) according to claim 1, **characterized in that** said controlling step comprises simultaneously activating a plurality of signals to draw the attention of the operator (5) for the plurality of display devices (2), if the overall pointing duration (D) of the plurality of display devices (2) is lower than the minimum pointing duration ($d_{min}$) of said plurality of display devices (2).

13. The support system (1) according to claim 1, **characterized in that** the plurality of time intervals ($I_1$, $I_2$, ..., $I_n$) have the same duration $I_d$ between 100 microseconds and 100 milliseconds, the number $I_n$ of said plurality of intervals is between 5 and 500, the number of display devices (2) is k, and the minimum pointing duration ($d_{min}$) is between $[(I_d \times I_n)/k]/3$ and $[(I_d \times I_n)/k]$.

14. The support system (1) according to claim 1, **characterized in that** the controller (7) is further configured to detect the fatigue of the operator (5).

15. A support method (1) of the control of surveillance cameras (10), comprising:

- operating a plurality of surveillance cameras (10), each installed in a respective site (100) to be controlled;
- operating a plurality of display devices (2) installed in a control area (3);
- transmitting a plurality of videos from the surveillance cameras (10) to the display devices (2) through a network infrastructure (1000);
operating a plurality of control cameras (4) in the control area (3) to film an operator (5) in the control area (3), said control cameras (4) being located in predetermined positions in the control area, at different angles with respect to the operator (5);
receiving, at a controller (7), the plurality of videos from the control cameras (4) and carrying out repeatedly, at time intervals ($I_1$, $I_2$, ..., $I_n$), the followings steps:

- processing the plurality of videos of the control cameras (4) in a time interval ($I_i$) for determining a pointing direction (6) of the gaze of the operator (5) within the control area (3);
- determining, between said display devices (2), a display device (2) pointed, in the time interval ($I_i$), by the gaze of the operator (5);
- determining a duration (d) of the pointing at said display device (2) pointed in the time interval ($I_i$); **characterized in that** the method furher comprises
- counting, for each display device (2), the overall pointing duration (D) in the plurality of time intervals ($I_1$, $I_2$, ..., $I_n$), said overall pointing duration (D) being the sum of the pointing durations (d) at the display device

(2) in each time interval ($I_1$, $I_2$, ..., $I_n$);
- comparing the overall pointing duration (D) of each display device (2) with a minimum pointing duration ($d_{min}$) of each display device (2);
- controlling one or more display devices (2) by activating a signal for drawing the attention of the operator (5), if the overall pointing duration (D) at said one or more display devices (2) is lower than the minimum pointing duration ($d_{min}$).

**Patentansprüche**

1. Hilfssystem (1) für die Kontrolle von Überwachungskameras (10), umfassend:

   - mehrere Überwachungskameras (10), wobei jede an einer jeweiligen Stelle (100) installiert ist, die kontrolliert werden soll;
   - mehrere Anzeigevorrichtungen (2), die in einem Kontrollbereich (3) installiert sind, wobei jede Anzeigevorrichtung (2) einen bekannten Standort in dem Kontrollbereich (3) aufweist;
   - eine Netzwerkinfrastruktur (1000), die dazu ausgelegt ist, die Übertragung mehrerer Videos von den Überwachungskameras (10) zu den Anzeigevorrichtungen (2) zu unterstützen;
   - mehrere Kontrollkameras (4), die in dem Kontrollbereich (3) installiert sind, um einen Bediener (5) in dem Kontrollbereich (3) zu filmen, wobei sich die Kontrollkameras (4) an vorgegebenen Positionen in dem Kontrollbereich bei unterschiedlichen Winkeln in Bezug auf den Bediener (5) befinden;
   - eine Steuereinheit (7), die dazu konfiguriert ist, mehrere Videos von den Kontrollkameras (4) zu empfangen und wiederholt in Zeitintervallen ($I_1$, $I_2$, ..., $I_n$) die folgenden Schritte auszuführen:

     - Verarbeiten der mehreren Videos der Kontrollkameras (4) in einem Zeitintervall ($I_i$), um eine Fokusrichtung (6) des Blicks des Bedieners (5) zu bestimmen;
     - Bestimmen, unter den Anzeigevorrichtungen (2), einer in dem Zeitintervall ($I_i$) von dem Blick des Bedieners (5) fokussierten Anzeigevorrichtung (2);
     - Bestimmen einer Dauer (d) des Fokussierens auf die mindestens eine Anzeigevorrichtung (2), die in dem Zeitintervall ($I_i$) fokussiert wird;

   **dadurch gekennzeichnet, dass**
   die Steuereinheit (7) weiter für Folgendes konfiguriert ist:

     - Zählen, für jede Anzeigevorrichtung (2), der Gesamtfokusdauer (D) in mehreren Zeitintervallen ($I_1$, $I_2$, ..., $I_n$), wobei die Gesamtfokusdauer (D) die Summe der Fokusdauern (d) auf die Anzeigevorrichtung (2) in jedem Zeitintervall ($I_1$, $I_2$, ..., $I_n$) ist;
     - Vergleichen der Gesamtfokusdauer (D) jeder Anzeigevorrichtung (2) mit einer Mindestfokusdauer ($d_{min}$) jeder Anzeigevorrichtung (2);
     - Steuern einer oder mehrerer Anzeigevorrichtungen (2), indem ein Signal zum Lenken der Aufmerksamkeit des Bedieners (5) aktiviert wird, falls die Gesamtfokusdauer (D) der einen oder mehreren Anzeigevorrichtungen (2) geringer als die Mindestfokusdauer ($d_{min}$) ist.

2. Hilfssystem (1) nach Anspruch 1, **dadurch gekennzeichnet, dass** die Steuereinheit (7) dazu konfiguriert ist, unter den Anzeigevorrichtungen (2) die Anzeigevorrichtung (2), die in dem Zeitintervall ($I_i$) fokussiert wird, durch Folgendes zu bestimmen:

   - Erfassen eines Blickpunkts des Bedieners (5) in dem Kontrollbereich (3), wobei der Kontrollbereich (3) ein dreidimensionaler Raum ist und der Blickpunkt ein Punkt des dreidimensionalen Raums ist;
   - Berechnen einer geraden Linie (R), die durch den Blickpunkt in der Fokusrichtung (6) verläuft;
   - Berechnen eines Schnittpunkts zwischen der geraden Linie (R) und einer der Oberflächen der Anzeigevorrichtungen (2) in dem Kontrollbereich (3),

   wobei die Anzeigevorrichtung (2), die in dem Zeitintervall ($I_i$) fokussiert wird, die Anzeigevorrichtung (2) ist, die der Oberfläche zugehörig ist, die von der geraden Linie (R) geschnitten wird.

3. Hilfssystem (1) nach Anspruch 2, **dadurch gekennzeichnet, dass** die Steuereinheit (7) dazu konfiguriert ist, den Blickpunkt des Bedieners (5) zu erfassen, indem ein Algorithmus künstlicher Intelligenz (AI-a) auf Basis eines Modells dreidimensionaler Bilder ausgeführt wird,

oder

indem mehrere zweidimensionale Koordinaten der Augen des Bedieners, die in Einzelbildern der mehreren Kontrollkameras (4) erhalten werden, bestimmt werden, die zweidimensionalen Koordinaten jeweiligen Koordinaten in dem Kontrollbereich (3) zugeordnet und dann trianguliert werden, wobei die Steuereinheit (7) dazu konfiguriert ist, die Bestimmung mehrerer zweidimensionaler Koordinaten auszuführen, indem ein Algorithmus künstlicher Intelligenz (AI-b) auf Basis eines Modells zwei dimensionaler Bilder ausgeführt wird.

4.  Hilfssystem (1) nach Anspruch 1, **dadurch gekennzeichnet, dass** die Steuereinheit (7) dazu konfiguriert ist, die Fokusrichtung (6) mittels eines Algorithmus künstlicher Intelligenz (AI-c) auf Basis eines Modells zweidimensionaler oder dreidimensionaler Bilder zu erfassen.

5.  Hilfssystem (1) nach Anspruch 2, **dadurch gekennzeichnet, dass** die Steuereinheit (7) dazu konfiguriert ist, einen dynamischen Kalibrierungsschritt auszuführen, bei dem die Kalibrierungspunkte auf den Anzeigevorrichtungen (2) angezeigt werden und der Bediener (5) auf die Kalibrierungspunkte schaut, um ein Zuordnungsmodell zwischen Kalibrierungspunktkoordinaten und der Ausrichtung des Gesichts und der Augen des Bedieners zu erstellen, wenn er auf die Kalibrierungspunkte schaut, wobei die Steuereinheit (7) weiter dazu konfiguriert ist, die Ausrichtung des Gesichts und der Augen des Bedieners einem Abstand zwischen dem Bediener (5) und den Anzeigevorrichtungen (2) zuzuordnen.

6.  Hilfssystem (1) nach Anspruch 1, **dadurch gekennzeichnet, dass** der Schritt zum Steuern einer oder mehrerer Anzeigevorrichtungen (2) Aktivieren eines Indikatorlichts, das der einen oder den mehreren Anzeigevorrichtungen (2) zugeordnet ist, oder Ändern einer Farbe des Indikatorlichts umfasst.

7.  Hilfssystem (1) nach Anspruch 1, **dadurch gekennzeichnet, dass** der Schritt zum Steuern einer oder mehrerer Anzeigevorrichtungen (2) Ändern einer Farbe des Videos umfasst, das von der einen oder den mehreren Anzeigevorrichtungen (2) von der Überwachungskamera (10) empfangen wird.

8.  Hilfssystem (1) nach Anspruch 1, **dadurch gekennzeichnet, dass** der Schritt zum Steuern einer oder mehrerer Anzeigevorrichtungen (2) Anzeigen eines Videos umfasst, das dem Video überlagert ist, das von der einen oder den mehreren Anzeigevorrichtungen (2) von der Überwachungskamera (10) empfangen wird, wobei die Überlagerung Bildin-Bild (PiP, Picture in Picture) geschieht.

9.  Hilfssystem (1) nach Anspruch 1, **dadurch gekennzeichnet, dass** die Steuereinheit (7) dazu konfiguriert ist, mehrere Mindestfokusdauern ($d_{min}$) festzulegen, wobei sich die mehreren Mindestfokusdauern ($d_{min}$) für verschiedene Anzeigevorrichtungen (2) unterscheiden.

10. Hilfssystem (1) nach Anspruch 8, **dadurch gekennzeichnet, dass** die Steuereinheit (7) dazu konfiguriert ist, die mehreren Mindestfokusdauern ($d_{min}$) für die verschiedenen Anzeigevorrichtungen (2) zu variieren, wobei die Variation die Erhöhung der Mindestfokusdauer ($d_{min}$) einer Anzeigevorrichtung (2) in den Zeitintervallen ($I_{n+1}$, $I_{n+2}$, ...) umfasst, die den mehreren Zeitintervallen ($I_1$, $I_2$, ..., $I_n$) folgen, falls die Gesamtfokusdauer (D) in den mehreren Zeitintervallen ($I_1$, $I_2$, ..., $I_n$) geringer als die Mindestfokusdauer ($d_{min}$) ist.

11. Hilfssystem (1) nach Anspruch 1, **dadurch gekennzeichnet, dass** die Steuereinheit (7) für Folgendes konfiguriert ist

    - Bestimmen von Sequenzen vom Fokussieren auf die mehreren Anzeigevorrichtungen (2), wobei jede Sequenz mindestens m Anzeigevorrichtungen (2) umfasst, wo m in der Steuereinheit (7) konfigurierbar ist;
    - Bestimmen mindestens eines Wiederauftretens in den Sequenzen vom Fokussieren auf die mehreren Anzeigevorrichtungen (2);
    - Aktivieren des Signals zum Lenken der Aufmerksamkeit des Bedieners (5), um ein weiteres Wiederauftreten in den Sequenzen vom Fokussieren auf die mehreren Anzeigevorrichtungen (2) innerhalb einer vorgegebenen Zeitspanne zu vermeiden.

12. Hilfssystem (1) nach Anspruch 1, **dadurch gekennzeichnet, dass** der Kontrollschritt gleichzeitiges Aktivieren mehrerer Signale umfasst, um die Aufmerksamkeit des Bedieners (5) auf die mehreren Anzeigevorrichtungen (2) zu lenken, falls die Gesamtfokusdauer (D) der mehreren Anzeigevorrichtungen (2) geringer als die Mindestfokusdauer ($d_{min}$) der mehreren Anzeigevorrichtungen (2) ist.

13. Hilfssystem (1) nach Anspruch 1, **dadurch gekennzeichnet, dass** die mehreren Zeitintervalle ($I_1$, $I_2$, ..., $I_n$) dieselbe Dauer $I_d$ zwischen 100 Mikrosekunden und 100 Millisekunden aufweisen, die Zahl $I_n$ der mehreren Intervalle zwischen 5 und 500 liegt, die Zahl von Anzeigevorrichtungen (2) k ist und die Mindestfokusdauer ($d_{min}$) zwischen $[(I_d \times I_n)/k]/3$ und $[(I_d \times I_n)/k]$ liegt.

14. Hilfssystem (1) nach Anspruch 1, **dadurch gekennzeichnet, dass** die Steuereinheit (7) weiter dazu konfiguriert ist, die Ermüdung des Bedieners (5) zu erfassen.

15. Hilfsverfahren (1) für die Kontrolle von Überwachungskameras (10), umfassend:

- Betreiben mehrerer Überwachungskameras (10), wobei jede an einer jeweiligen Stelle (100) installiert ist, die kontrolliert werden soll;
- Betreiben mehrerer Anzeigevorrichtungen (2), die in einem Kontrollbereich (3) installiert sind;
- Übertragen mehrerer Videos von den Überwachungskameras (10) an die Anzeigevorrichtungen (2) über eine Netzwerkinfrastruktur (1000);
Betreiben mehrerer Kontrollkameras (4) in dem Kontrollbereich (3), um einen Bediener (5) in dem Kontrollbereich (3) zu filmen, wobei sich die Kontrollkameras (4) an vorgegebenen Positionen in dem Kontrollbereich bei unterschiedlichen Winkeln in Bezug auf den Bediener (5) befinden; Empfangen, bei einer Steuereinheit (7), der mehreren Videos von den Kontrollkameras (4) und wiederholtes Ausführen, bei Zeitintervallen ($I_1$, $I_2$, ..., $I_n$), der folgenden Schritte:

- Verarbeiten der mehreren Videos der Kontrollkameras (4) in einem Zeitintervall ($I_i$), um eine Fokusrichtung (6) des Blicks des Bedieners (5) zu bestimmen;
- Bestimmen, unter den Anzeigevorrichtungen (2), einer in dem Zeitintervall ($I_i$) von dem Blick des Bedieners (5) fokussierten Anzeigevorrichtung (2);
- Bestimmen einer Dauer (d) des Fokussierens auf die mindestens eine Anzeigevorrichtung (2), die in dem Zeitintervall ($I_i$) fokussiert wird;

**dadurch gekennzeichnet, dass** das Verfahren weiter umfasst

- Zählen, für jede Anzeigevorrichtung (2), der Gesamtfokusdauer (D) in den mehreren Zeitintervallen ($I_1$, $I_2$, ..., $I_n$), wobei die Gesamtfokusdauer (D) die Summe der Fokusdauern (d) auf die Anzeigevorrichtung (2) in jedem Zeitintervall ($I_1$, $I_2$, ..., $I_n$) ist;
- Vergleichen der Gesamtfokusdauer (D) jeder Anzeigevorrichtung (2) mit einer Mindestfokusdauer ($d_{min}$) jeder Anzeigevorrichtung (2);
- Steuern einer oder mehrerer Anzeigevorrichtungen (2), indem ein Signal zum Lenken der Aufmerksamkeit des Bedieners (5) aktiviert wird, falls die Gesamtfokusdauer (D) der einen oder mehreren Anzeigevorrichtungen (2) geringer als die Mindestfokusdauer ($d_{min}$) ist.

**Revendications**

1. Système de support (1) pour le contrôle de caméras de surveillance (10), comprenant :

- une pluralité de caméras de surveillance (10), chacune installée dans un site respectif (100) à contrôler ;
- une pluralité de dispositifs d'affichage (2) installés dans une zone de contrôle (3), chaque dispositif d'affichage (2) ayant un emplacement connu dans la zone de contrôle (3) ;
- une infrastructure de réseau (1000) adaptée pour supporter la transmission d'une pluralité de vidéos des caméras de surveillance (10) aux dispositifs d'affichage (2) ;
une pluralité de caméras de contrôle (4) installées dans la zone de contrôle (3) pour filmer un opérateur (5) dans la zone de contrôle (3), lesdites caméras de contrôle (4) étant situées dans des positions prédéterminées dans la zone de contrôle, à différents angles par rapport à l'opérateur (5) ;
un dispositif de commande (7) configuré pour recevoir une pluralité de vidéos à partir des caméras de contrôle (4) et réaliser de manière répétée, à des intervalles de temps ($I_1$, $I_2$, ..., $I_n$), les étapes suivantes :

- le traitement de la pluralité de vidéos des caméras de contrôle (4) dans un intervalle de temps ($I_i$) pour déterminer une direction de pointage (6) du regard de l'opérateur (5) ;
- la détermination, entre lesdits dispositifs d'affichage (2), d'un dispositif d'affichage (2) pointé, dans l'inter-

valle de temps ($I_i$), par le regard de l'opérateur (5) ;
- la détermination d'une durée (d) du pointage au niveau dudit au moins un dispositif d'affichage (2) pointé dans l'intervalle de temps ($I_i$) ;

**caractérisé en ce que** ledit dispositif de commande (7) est configuré en outre pour :

- compter, pour chaque dispositif d'affichage (2), la durée de pointage totale (D) dans une pluralité d'intervalles de temps ($I_1$, $I_2$, ..., $I_n$), ladite durée de pointage totale (D) étant la somme des durées de pointage (d) au niveau du dispositif d'affichage (2) dans chaque intervalle de temps ($I_1$, $I_2$, ..., $I_n$) ;
- comparer la durée de pointage totale (D) de chaque dispositif d'affichage (2) avec une durée de pointage minimale ($d_{min}$) de chaque dispositif d'affichage (2) ;
- commander un ou plusieurs dispositifs d'affichage (2) en activant un signal pour attirer l'attention de l'opérateur (5), si la durée de pointage totale (D) au niveau desdits un ou plusieurs dispositifs d'affichage (2) est inférieure à la durée de pointage minimale ($d_{min}$).

2. Système de support (1) selon la revendication 1, **caractérisé en ce que** le dispositif de commande (7) est configuré pour déterminer, entre lesdits dispositifs d'affichage (2), le dispositif d'affichage (2) pointé dans l'intervalle de temps ($I_i$) par :

- la détection d'un point de vue de l'opérateur (5) dans la zone de contrôle (3), ladite zone de contrôle (3) étant un espace tridimensionnel et ledit point de vue étant un point de l'espace tridimensionnel ;
- le calcul d'une ligne droite (R) passant par le point de vue dans la direction de pointage (6) ;
- le calcul d'une intersection entre la ligne droite (R) et une des surfaces des dispositifs d'affichage (2) dans la zone de contrôle (3),

le dispositif d'affichage (2) pointé dans l'intervalle de temps ($I_i$) étant le dispositif d'affichage (2) associé à la surface coupée par la ligne droite (R).

3. Système de support (1) selon la revendication 2, **caractérisé en ce que** le dispositif de commande (7) est configuré pour détecter le point de vue de l'opérateur (5) par l'exécution d'un algorithme d'intelligence artificielle, (AI-a) basé sur un modèle d'images tridimensionnelles
ou
par la détermination d'une pluralité de coordonnées bidimensionnelles des yeux de l'opérateur acquises dans des trames par la pluralité de caméras de contrôle (4), le mappage desdites coordonnées bidimensionnelles dans des coordonnées respectives dans la zone de contrôle (3), et ensuite la triangulation, le dispositif de commande (7) étant configuré pour réaliser ladite détermination d'une pluralité de coordonnées bidimensionnelles par l'exécution d'un algorithme d'intelligence artificielle, (AI-b) basé sur un modèle d'images bidimensionnelles.

4. Système de support (1) selon la revendication 1, **caractérisé en ce que** le dispositif de commande (7) est configuré pour détecter la direction de pointage (6) au moyen d'un algorithme d'intelligence artificielle, (AI-c) basé sur un modèle d'images bidimensionnelles ou tridimensionnelles.

5. Système de support (1) selon la revendication 2, **caractérisé en ce que** le dispositif de commande (7) est configuré pour réaliser une étape d'étalonnage dynamique dans laquelle les points d'étalonnage sont présentés sur les dispositifs d'affichage (2) et l'opérateur (5) examine les points d'étalonnage pour construire un modèle d'association entre des coordonnées de points d'étalonnage et l'orientation du visage et des yeux de l'opérateur quand il examine les points d'étalonnage, le dispositif de commande (7) étant configuré en outre pour associer l'orientation du visage et des yeux de l'opérateur à une distance entre l'opérateur (5) et les dispositifs d'affichage (2).

6. Système de support (1) selon la revendication 1, **caractérisé en ce que** ladite étape de commande d'un ou plusieurs dispositifs d'affichage (2) comprend l'activation d'un voyant lumineux associé auxdits un ou plusieurs dispositifs d'affichage (2) ou le changement d'une couleur dudit voyant lumineux.

7. Système de support (1) selon la revendication 1, **caractérisé en ce que** ladite étape de commande d'un ou plusieurs dispositifs d'affichage (2) comprend le changement d'une couleur de la vidéo reçue par lesdits un ou plusieurs dispositifs d'affichage (2) à partir de la caméra de surveillance (10).

8. Système de support (1) selon la revendication 1, **caractérisé en ce que** ladite étape de commande d'un ou plusieurs dispositifs d'affichage (2) comprend l'affichage d'une vidéo superposée sur la vidéo reçue par lesdits un ou plusieurs dispositifs d'affichage (2) à partir de la caméra de surveillance (10), ladite superposition étant du type Image dans l'Image (PiP).

9. Système de support (1) selon la revendication 1, **caractérisé en ce que** le dispositif de commande (7) est configuré pour définir une pluralité de durées de pointage minimale ($d_{min}$), ladite pluralité de durées de pointage minimale ($d_{min}$) étant différente pour divers dispositifs d'affichage (2).

10. Système de support (1) selon la revendication 8, **caractérisé en ce que** le dispositif de commande (7) est configuré pour faire varier la pluralité de durées de pointage minimales ($d_{min}$) pour les divers dispositifs d'affichage (2), ladite variation comprenant l'augmentation de la durée de pointage minimale ($d_{min}$) d'un dispositif d'affichage (2) dans les intervalles de temps ($I_{n+1}$, $I_{n+2}$, ...) suivant ladite pluralité d'intervalles de temps ($I_1$, $I_2$, ..., $I_n$), si la durée de pointage totale (D) dans la pluralité d'intervalles de temps ($I_1$, $I_2$, ..., $I_n$) est inférieure à la durée de pointage minimale ($d_{min}$).

11. Système de support (1) selon la revendication 1, **caractérisé en ce que** le dispositif de commande (7) est configuré pour

- déterminer des séquences de pointage au niveau de la pluralité de dispositifs d'affichage (2), chaque séquence comprenant au moins m dispositifs d'affichage (2), où m est configurable par le dispositif de commande (7) ;
- déterminer au moins une récurrence dans les séquences de pointage au niveau de la pluralité de dispositifs d'affichage (2) ;
- activer le signal pour attirer l'attention de l'opérateur (5), pour éviter une autre récurrence dans les séquences de pointage au niveau de la pluralité de dispositifs d'affichage (2) dans une période de temps prédéfinie.

12. Système de support (1) selon la revendication 1, **caractérisé en ce que** ladite étape de commande comprend l'activation simultanée d'une pluralité de signaux pour attirer l'attention de l'opérateur (5) pour la pluralité de dispositifs d'affichage (2), si la durée de pointage totale (D) de la pluralité de dispositifs d'affichage (2) est inférieure à la durée de pointage minimale ($d_{min}$) de ladite pluralité de dispositifs d'affichage (2).

13. Système de support (1) selon la revendication 1, **caractérisé en ce que** la pluralité d'intervalles de temps ($I_1$, $I_2$, ..., $I_n$) ont la même durée $I_d$ entre 100 microsecondes et 100 millisecondes, le nombre $I_n$ de ladite pluralité d'intervalles est entre 5 et 500, le nombre de dispositifs d'affichage (2) est k, et la durée de pointage minimale ($d_{min}$) est entre $[(I_d \times I_n)/k)]/3$ et $[(I_d \times I_n)/k)]$.

14. Système de support (1) selon la revendication 1, **caractérisé en ce que** le dispositif de commande (7) est configuré en outre pour détecter la fatigue de l'opérateur (5).

15. Procédé de support (1) pour le contrôle de caméras de surveillance (10), comprenant :

- le fonctionnement d'une pluralité de caméras de surveillance (10), chacune installée dans un site respectif (100) à contrôler ;
- le fonctionnement d'une pluralité de dispositifs d'affichage (2) installés dans une zone de contrôle (3) ;
- la transmission d'une pluralité de vidéos des caméras de surveillance (10) aux dispositifs d'affichage (2) par l'intermédiaire d'une infrastructure de réseau (1000) ; le fonctionnement d'une pluralité de caméras de contrôle (4) dans la zone de contrôle (3) pour filmer un opérateur (5) dans la zone de contrôle (3), lesdites caméras de contrôle (4) étant situées dans des positions prédéterminée dans la zone de contrôle, à différents angles par rapport à l'opérateur (5) ;
la réception, au niveau d'un dispositif de commande (7), de la pluralité de vidéos à partir des caméras de contrôle (4) et la réalisation de manière répétée, à des intervalles de temps ($I_1$, $I_2$, ..., $I_n$), des étapes suivantes :

- le traitement de la pluralité de vidéos des caméras de contrôle (4) dans un intervalle de temps ($I_i$) pour déterminer une direction de pointage (6) du regard de l'opérateur (5) dans la zone de contrôle (3) ;
- la détermination, entre lesdits dispositifs d'affichage (2), d'un dispositif d'affichage (2) pointé, dans l'intervalle de temps ($I_i$), par le regard de l'opérateur (5) ;
- la détermination d'une durée (d) du pointage au niveau dudit un dispositif d'affichage (2) pointé dans l'intervalle de temps ($I_1$) ;

**caractérisé en ce que** le procédé comprend en outre

- le comptage, pour chaque dispositif d'affichage (2), de la durée de pointage totale (D) dans la pluralité d'intervalles de temps ($I_1$, $I_2$, ..., $I_n$), ladite durée de pointage totale (D) étant la somme des durées de pointage (d) au niveau du dispositif d'affichage (2) dans chaque intervalle de temps ($I_1$, $I_2$, ..., $I_n$) ;
- la comparaison de la durée de pointage totale (D) de chaque dispositif d'affichage (2) avec une durée de pointage minimale ($d_{min}$) de chaque dispositif d'affichage (2) ;
- la commande d'un ou plusieurs dispositifs d'affichage (2) en activant un signal pour attirer l'attention de l'opérateur (5), si la durée de pointage totale (D) au niveau desdits un ou plusieurs dispositifs d'affichage (2) est inférieure à la durée de pointage minimale ($d_{min}$).

FIG. 1

EP 4 329 293 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018190091 A
- US 2021004195 A
- WO 2021199853 A1